## Europäisches Patentamt

## European Patent Office

## Office européen des brevets

(11) Veröffentlichungsnummer: **0 140 834**
**B1**

(12) **EUROPÄISCHE PATENTSCHRIFT**

(45) Veröffentlichungstag der Patentschrift:
09.03.88

(51) Int. Cl.⁴: **B 23 K 20/04**

(21) Anmeldenummer: **84810447.7**

(22) Anmeldetag: **13.09.84**

(54) **Verfahren zum Herstellen von plattierten Bändern.**

(30) Priorität: **20.09.83 CH 5095/83**

(43) Veröffentlichungstag der Anmeldung:
**08.05.85 Patentblatt 85/19**

(45) Bekanntmachung des Hinweises auf die Patenterteilung:
**09.03.88 Patentblatt 88/10**

(84) Benannte Vertragsstaaten:
**AT BE CH DE FR GB IT LI LU NL SE**

(56) Entgegenhaltungen:
**CH - A - 128 096**
**FR - A - 2 532 869**
**US - A - 2 558 093**

**PATENT ABSTRACTS OF JAPAN, Band 4, Nr. 111,**
**9. August 1980, Seite 156M25 (M-25) (593) &**
**JP-A-55-70491 (NITSUSHIN SEIKOU) 27-05-1980**

(73) Patentinhaber: **SCHWEIZERISCHE ALUMINIUM AG,**
**CH-3965 Chippis (CH)**

(72) Erfinder: **Gold, Ernst, Belle-Cité, CH-3964 Veyras (CH)**
Erfinder: **Trägner, Erich, Plappertweg 3a, D-7700 Singen (DE)**
Erfinder: **Lenz, Dieter, Hohenstoffelstrasse 11, D-7700 Singen (DE)**

(74) Vertreter: **Breiter, Heinz, Patentanwalt H. Breiter AG**
**Wartstrasse 4 Postfach 1163, CH-8401 Winterthur (CH)**

**Beschreibung**

Die Erfindung betrifft ein Verfahren zum Herstellen von plattierten Bändern, wobei ein Kernband, insbesondere ein Metallband, einem von zumindest zwei Walzen gebildeten Walzspalt zugeführt und mit einem Plattierband zumindest einseitig belegt wird, wobei das Plattierband vor dem Walzspalt dem Kernband durch mechanische Verformung angeheftet wird, sowie eine Vorrichtung hierfür.

Verfahren zum Plattieren von insbesondere metallischen Bändern finden beispielsweise dann Anwendung, wenn ein Kernmaterial minderer Qualität mit einer nur dünnen Schicht von hochwertigem Material belegt werden soll. Die mindere Qualität des Kernmaterials kann sich im Hinblick auf die verwendete Legierung ergeben. Hierzu zählen die Legierungen, welche einen hohen Anteil aus rezykliertem Schrott enthalten, da bei ihnen sowohl der Anteil der einzelnen Elemente als auch deren Verteilung sehr unterschiedlich ist. Die mindere Qualität des Kernmaterials kann auch in der unregelmässigen Rauheit der Gusshaut von beispielsweise auf kontinuierlich arbeitenden Giessanlagen hergestellten Bändern bestehen.

Da es aber für viele Verwendungsfälle von Bandmaterial gerade auf die Oberflächeneigenschaft ankommt, finden Plattierverfahren häufig Anwendung.

Während beispielsweise Gussbarren Plattierbleche oder -platten aufgelegt oder aufgeschweisst und beide zusammen nach einem Vorwärmen warmgewalzt werden, bedarf es bei gegossenen Bändern einer synchron arbeitenden Zufuhreinrichtung von Plattiermaterial. Dabei ist es gleichgültig, ob diese Bänder von einer Haspel als Zwischenlager abgerollt werden oder aus der Bandgiessanlage direkt kommen. Um derartige Bänder zu plattieren, sind Anordnungen bekannt, bei denen, gesteuert über Führungsrollen, ein Plattierband einer Auflageeinheit zugeführt und dort dem Kernmaterial aufgelegt wird. Nach dem Durchlaufen einer Vorheizzone gelangt diese Paarung in einen Walzspalt eines Warmwalzgerüstes. Nachteilig hat sich hierbei erwiesen, dass das Plattierband infolge des relativ langen Kontaktes mit dem Kernmaterial mit etwa gleicher Temperatur in den Walzspalt einmündet. Die Warmumformeigenschaften der beiden Werkstoffe sind hier nahezu gleich, weshalb keine für eine optimale Verschweissung beider Werkstoffe notwendige Relativbewegung zwischen Kern- und Plattiermaterial stattfindet.

Beispielsweise aus der JP-A 5 570 491 ist ein derartiges Verfahren bekannt, bei welchem Kern- und Plattiermaterial vor dem Einlauf in die Vorheizzone zwischen einem Klemmwalzpaar verbunden werden.

Bei hochwertigem Plattiermaterial treten unerwünschte Kornvergröberungen auf, welche sich um so unangenehmer auswirken, je länger die Kontaktzeit von Kern- und Plattiermaterial zwischen Auflagepunkt und Walzspalt ist. Gerade hochwertige Produkte benötigen aber ein sehr feines Korn.

Weiterhin wurde beobachtet, dass zwischen dem Auflagepunkt und dem Walzspalt zumindest beim Plattiermaterial Verwerfungen aufgrund der unterschiedlichen thermischen Ausdehnung auftreten, so dass ein geordnetes Aufliegen nicht mehr gewährleistet ist und sich daneben auch Blasen infolge von Lufteinschlüssen bilden, welche die Haftfestigkeit durch Verringerung des Haftflächenanteils von Kern- zu Plattiermaterial negativ beeinflussen.

Beispielsweise bei der Herstellung von Bändern aus einer Aluminiumlegierung mit einem höheren Magnesiumanteil entsteht auf dem Weg von einer Bandgiessanlage zu einem Warmwalzgerüst eine Oxidhaut auf dem gegossenen Band, welche die Verbindung mit Plattiermaterial erschwert. Je länger dieser Weg ist, so bei Zwischenschaltung einer Vorwärmzone, umso störender wirkt sich das Oxidwachstum aus. Diese Oxidhaut sollte deshalb möglichst vielfältig aufgelöst werden, damit eine Diffusionsverbindung beider Materialien im Walzspalt stattfinden kann.

In der CH-A 128 096 wird eine Einrichtung zum Zusammenheften der Enden von Metallfolienbahnen beschrieben, in welcher die miteinander zu verbindenden Folienteile aufeinandergelegt und durch Druck eines Walzenpaars so deformiert werden, dass stellenweise über die glatten Folienteile hinausragende Partien entstehen, welche ineinandergreifen und ein Aneinanderhaften der Folienteile erzeugen. Das Walzenpaar umfasst hierbei eine mit Spitzen sowie eine mit entsprechenden Vertiefungen versehene Walze.

Die Erfinder haben sich zum Ziel gesetzt, ein Verfahren und eine Vorrichtung der eingangs erwähnten Art zu entwickeln, bei welchen die obenbeschriebenen Nachteile vermieden werden. Zudem soll die Oberflächeneigenschaft des Endproduktes und die Haftfestigkeit zwischen Plattier- und Kernmaterial verbessert werden.

Zur Lösung dieser Aufgabe führt ein Verfahren, bei dem dieser Heftvorgang so lange andauert, bis das Plattierband zusammen mit dem Metallband von zumindest einer Walze ergriffen wird. Dementsprechend wird der Heftvorgang nahe dem Walzspalt durchgeführt, so dass die Kontaktzeit zwischen dem Metall- und dem Plattierband sehr kurz ist. Sobald der Heftvorgang beendet ist, findet kein Kontakt mehr vor dem Walzspalt statt. Dieses Verfahren soll erfindungsgemäss auf das Plattieren eines Kernbandes aus jedem beliebigen Werkstoff mit einen Plattierband aus ebenfalls beliebigem Werkstoff anwendbar sein. Bevorzugt findet es jedoch beim Plattieren eines Metallbandes mit einem weiteren Metallband Anwendung.

Da das zu beschichtende Metallband gerade aus der Giessanlage kommt, weist es eine Temperatur auf, welche wesentlich höher ist (z.B. bei Aluminium 400–600°C) als die des Plattierbandes (z.B. bei Aluminium 20–70°C). Der Unterschied der Temperatur hat einen sehr unterschiedlichen $K_f$-Wert beider Werkstoffe zur Folge, wobei unter

dem $K_f$-Wert der Kennwert für die Formänderungsfestigkeit eines Werkstoffes zu verstehen ist. Dies bewirkt, dass keine reine Diffusionsverbindung stattfindet, sondern sie mit einer sogenannten Rutschreibungs-Verankerung einhergeht. Einer weiteren besseren Verbindung beider Bänder dient erfindungsgemäss eine Aufrauhung der Oberfläche des Metallbandes vor dem Heftvorgang.

Das Fehlen der Kontaktzeit zwischen Plattierband und Metallband vor dem Eindringen in den Walzspalt bewirkt weiter, dass in dem Plattierband keine Kornveränderungen stattfinden. Dies erweist sich besonders günstig für die Herstellung von hochwertigen Fertig- oder Halbzeugprodukten.

Bei einer Vorrichtung zum Herstellen von plattierten Bändern aus einem beispielsweise von einer Bandgiessanlage, Haspel od.dgl. zu einem von zumindest zwei Walzen geformten Walzspalt geführten Metallband und zumindest einem Plattierband ist vorgesehen, dass das Metallband vor dem Einlaufen in den Walzspalt von einer Heftrolle über- und/oder untergriffen und das Plattierband zwischen Metallband und Heftrolle angeordnet ist. Die Mantelfläche der Heftrolle kann dabei mit Vorsprüngen besetzt sein, welche das Plattierband in ihrem Bereich mechanisch in das Metallband eindrücken und so festheften. Eine ähnliche Wirkung wird auch durch ein Versehen der Mantelflächen mit querschnittlich dreiecksförmigen Reifen erreicht, welche sich ebenfalls in das Plattierband eingraben. Die Heftrollen sind nach der Aufnahme des Metall- bzw. Plattierbandes in dem Walzspalt von dem Metallband wegbewegbar ausgestaltet, so dass zwischen Plattierband und Metallband ein bestimmter Winkel entsteht. Damit wird unter anderem erreicht, dass die Zuführung von Plattierband von den Walzen selbst übernommen wird und synchron zur Bewegung des Metallbandes steuerbar ist. Eine zusätzliche Steuereinrichtung erübrigt sich. Ist beispielsweise das Plattiermaterial aufgehaspelt, so kann es zwischen Haspel und Walzspalt infolge der Trägheit der Haspel gespannt gehalten werden. Ggf. kann dieser Haspel noch eine Rutschbremse zugeordnet werden. Auf diese Weise wird ein Verwerfen des Plattierbandes, abgesehen davon, dass vor dem Walzspalt keine temperaturbedingten Spannungen auftreten, vermieden. Diese Vorrichtung ist nicht nur auf die Verwendung für Metallbänder beschränkt, sondern mit ihr kann ein Band beliebigen Werkstoffes mit einem anderen Band beliebigen Werkstoffes plattiert werden.

Erfindungsgemäss sind weiterhin den Heftrollen Bürsten zum Aufrauhen der Oberfläche des Metallbandes vorgeschaltet. Diese Bürsten brechen die gebildete Oxidhaut auf, wobei sich auf der kurzen Strecke zwischen Bürste und Walzspalt von etwa 60 Sek. keine Oxidhaut mehr bilden kann. Dieses, die unterschiedlichen $K_f$-Werte und die Tatsache, dass durch die direkte Eingabe des Plattierbandes in den Walzspalt keine Lufteinschlüsse stattfinden, bewirkt, dass zwischen Plattier- und Metallband eine hervorragende Diffusionsverbindung und zusätzlich eine Rutschreibungs-Verankerung stattfindet.

Bevorzugt werden sowohl die Bürsten wie auch die Heftrollen nebst denen ihnen zugeordneten hydraulischen Antriebseinheiten an einem Tragrahmen angeordnet, welcher auch die zu Rollen aufgewickelten Plattierbänder aufnimmt.

Diese Vorrichtung ist ausserordentlich einfach ausgestaltet und kommt mit nur sehr wenigen mechanischen oder elektrischen Elementen aus. Dementsprechend gering ist auch ihre Störungsanfälligkeit.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1 eine schematische Darstellung einer Einrichtung zum Plattieren eines Metallbandes;
Fig. 2 eine Vorderansicht einer Heftrolle;
Fig. 3 einen Querschnitt durch die Heftrolle nach Fig. 2, entlang Linie III–III;
Fig. 4 ein weiteres Ausführungsbeispiel einer Heftrolle;
Fig. 5 einen Querschnitt durch die Heftrolle nach Fig. 4, entlang Linie V–V;
Fig. 6 einen vergrössert dargestellten Ausschnitt aus der Einrichtung nach Fig. 1.
Fig. 7 eine graphische Darstellung eines $K_f$-Wechselschrittes.

Bei einer Einrichtung zum Plattieren eines Metallbandes 1 wird das Band 1 von einer – nicht dargestellten – kontinuierlichen Bandgiessanlage, Haspel od.dgl. zu einer Walzvorrichtung geführt, von welcher, der Übersichtlichkeit halber, nur zwei Walzen 2 und 3 angedeutet sind.

Zwischen der Bandgiessanlage bzw. Haspel od.dgl. und der Walzvorrichtung wird ein auf das Band 1 aufzubringendes Plattierband 4 ggf. der Oberseite 5 und der Unterseite 6 des Metallbandes 1 zugeführt. Dieses Plattierband 4 befindet sich zu Rollen 7 aufgewickelt in einem Tragrahmen 8, wobei die gewünschte Abspulrichtung von Umlenkrollen 9 vorgegeben wird.

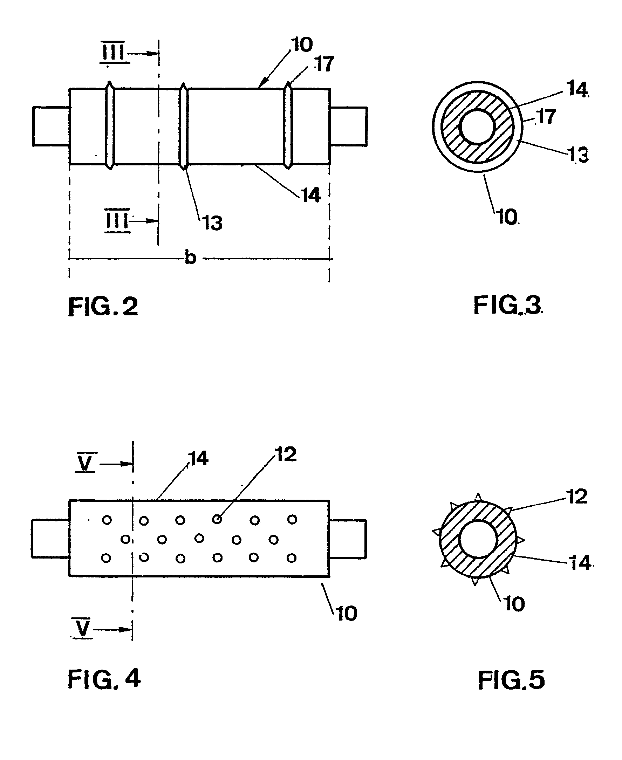

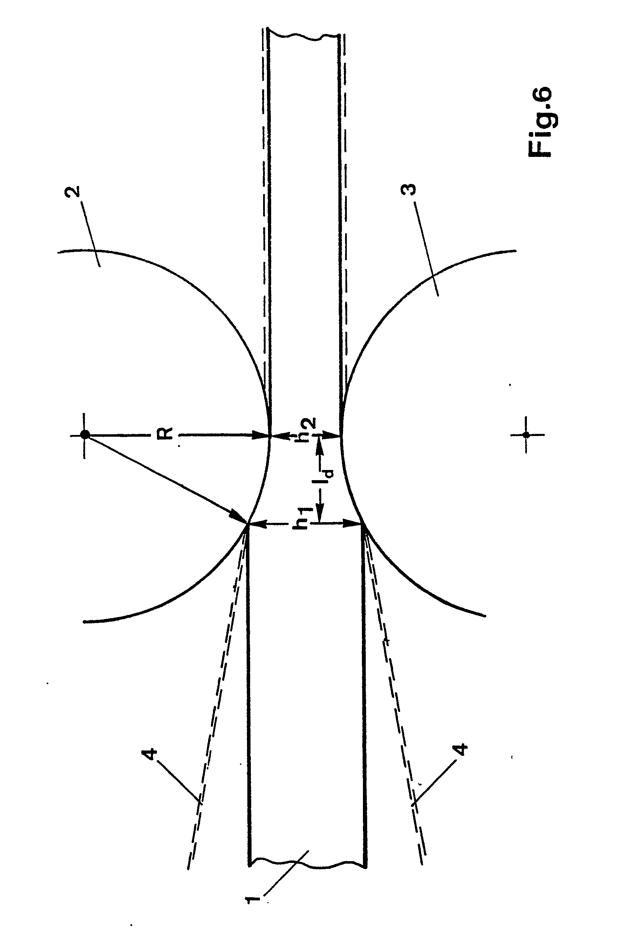

An dem Tragrahmen 8 sind auch jeweils beidseits des Metallbandes 1 Heftrollen 10 angeordnet, welche über – gestrichelt angedeutete – hydraulische Einrichtungen 11 entlang einer Linie A bewegt werden können. Eine Heftrolle 10 weist gem. Fig. 2 vorzugsweise eine Breite b auf, welche der Breite des Metallbandes 1 entspricht. Auf ihrer Mantelfläche 14 ist sie mit Vorsprüngen 12 (Fig. 4 und 5) besetzt, welche in ihrem Bereich das Plattierband 4 in das Metallband 1 drücken. Anstelle oder auch zusätzlich zu diesen Vorsprüngen 12 sind auf der Mantelfläche 14 querschnittlich dreiecksförmige Reifen 13 vorgesehen, welche sich mit einer Laufschneide 17 in das Plattierband 4 eingraben können (Fig. 2 und 3).

Bei Beginn des Plattiervorganges drücken die Heftrollen 10 die Plattierbänder 4 auf das Metallband 1, wobei durch die Vorsprünge 12 bzw. die Reifen 13 eine innige Verbindung zwischen den beiden Bändern 1 und 4 erzeugt wird. Dieses Anheften kann ggf. so lange fortdauern, bis das Band 1 mit den aufgelegten Plattierbändern 4 einen von den beiden Walzen 2 und 3 geformten Walzspalt der Breite $h_2$ einmündet. Danach werden die Heftrollen 10 mittels der hydraulischen Einrichtung 11 zurückgezogen (gestrichelt dargestellt) und die Plattierbänder 4 direkt von den Walzen 2 und 3 synchron mit dem Metallband 1 von den Rollen 7 abgezogen, wobei sie ohne vorherigen Kontakt mit dem Metallband 1 in den Walzspalt einlaufen und dort dem Plattiervorgang unterworfen werden.

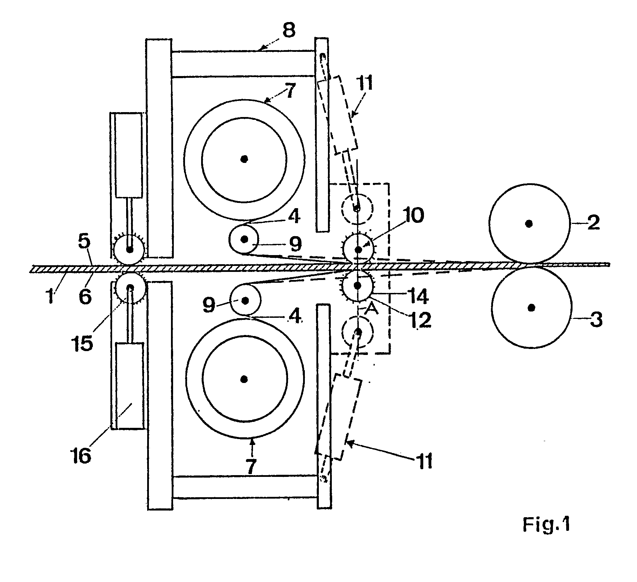

Nach Fig. 1 sind weiterhin vor den Heftrollen 10 am Tragrahmen 8 rollenden Bürsten 15 vorgesehen, welche durch Antriebe 16 bewegt werden können. Sie dienen der Aufrauhung der Oberfläche des Metallbandes 1.

Nach Fig. 6 trifft das Plattierband 4 in einem Winkel auf das Metallband 1. Der Abstand der Punkte, an denen das Metallband 1 zusammen mit den Plattierbändern 4 die Walze 2 bzw. 3 berührt, wird mit $h_1$ und die Länge zwischen $h_1$ und der Breite $h_2$ des Walzspaltes mit $1_d$ bezeichnet. Dabei ist $1_d$ das Mass für die gedrückte Länge und wird durch die Formel

$$\sqrt{(h_1 - h_2) \times R}$$

bestimmt, wobei R der Walzenradius ist.

Das Plattierband 4 und das Metallband 1 besitzen aufgrund ihrer verschiedenen Ausgangszustände (weich, hart, halbhart u.a.) und unterschiedlicher Temperaturen (bei Aluminium: Plattierband 20°C, Metallband 520°C) sehr unterschiedliche Verformungseigenschaften beim Eintritt in den Walzspalt. Der Kennwert dafür ist der sog. $K_f$-Wert, d.h. die Formänderungsfestigkeit des Werkstoffs.

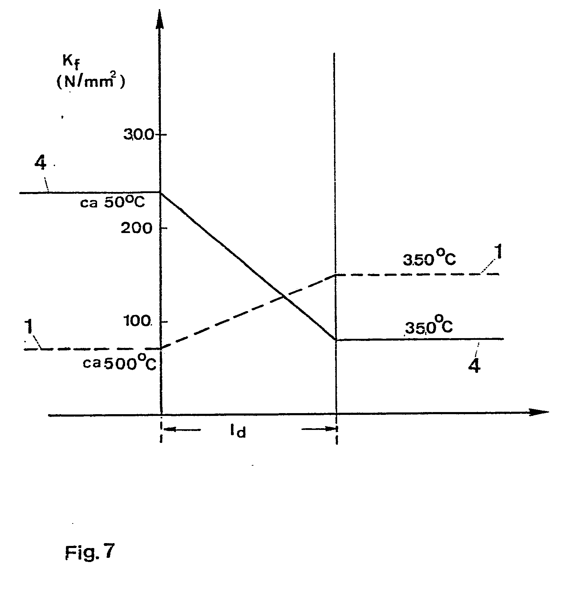

Fig. 7 zeigt ein Beispiel eines sogenannten $K_f$-Wechselschritts für eine Aluminiumlegierungspaarung. Ein walzhartes Aluminiumplattierband 4 besitzt beim Eintritt in den Walzspalt mit Raumtemperatur einen $K_f$-Wert von ca. 240 N/mm². Während des Plattiervorgangs «wechselt» der $K_f$-Wert des Plattierbandes 4 innerhalb der gedrückten Länge $1_d$, da die Temperatur sich wesentlich erhöht (300-600°C). Er beträgt beim Austritt aus dem Walzspalt etwa 80 N/mm².

Das Metallband 1 (hier aus Aluminium) erfährt dagegen einen $K_f$-Wechselschritt im umgekehrten Sinn. Sein $K_f$-Wert beträgt beim Eintritt in den Walzspalt bei Temperaturen von ca. 400-600°C ca. 70 N/mm² und «wechselt» über die gedrückte Länge $1_d$ aufgrund der Temperaturabnahme und der Strichabnahme auf ca. 150 N/mm². Diese beiden gegenläufigen Prozesse umfassen den Begriff «$K_f$-Wechselschritt».

Durch geeignete Anpassung zwischen Legierung, Ausgangszustand und Temperatur können so zwischen Plattierband 4 und Metallband 1 optimale Verankerungsbedingungen geschaffen werden, indem möglichst unterschiedliche $K_f$-Werte zwischen Plattierband 4 und Metallband 1 über die gedrückte Länge $1_d$ eingestellt werden. Dadurch erfolgt eine starke Relativbewegung zwischen Plattierband 4 und Metallband 1, die zum Aufbrechen der oxidierten Oberflächen führt und so eine Diffusionsverbindung und Rutschreibungs-Verankerung zwischen den beiden Metallen erlaubt.

## Patentansprüche

1. Verfahren zum Herstellen von plattierten Bändern, wobei ein Kernband (1), insbesondere ein Metallband (1), einem von zumindest zwei Walzen (2, 3) gebildeten Walzspalt zugeführt und mit einem Plattierband (4) zumindest einseitig belegt wird, wobei das Plattierband (4) vor dem Walzspalt dem Kernband (1) durch mechanische Verformung angeheftet wird, dadurch gekennzeichnet, dass der Heftvorgang höchstens so lange durchgeführt wird, bis das Plattierband (4) zusammen mit dem Kernband (1) von zumindest einer Walze (2, 3) ergriffen wird.

2. Verfahren nach Anspruch 1, dadurch gekennzeichnet, dass die Oberfläche des Kernbandes (1) vor dem Heftvorgang aufgerauht wird.

3. Verfahren nach Anspruch 1 oder 2, dadurch gekennzeichnet, dass ein heisses Kernband (1) (z.B. Aluminiumband mit 400-600°C) mit einem kalten Plattierband (4) (z.B. Aluminiumband mit 20-70°C) beschichtet wird.

4. Vorrichtung zum Herstellen von plattierten Bändern aus einem von beispielsweise einer Bandgiessanlage, Haspel od.dgl. zu einem von zumindest zwei Walzen (2, 3) geformten Walzspalt geführten Metallband (1) und zumindest einem Plattierband (4), bei welcher das Metallband (1) vor dem Einlaufen in den Walzspalt von einer Heftrolle (10) über- und/oder untergriffen und das Plattierband (4) zwischen Metallband (1) und Heftrolle (10) angeordnet ist, dadurch gekennzeichnet, dass die Heftrolle (10) auf ihrer Mantelfläche (14) Vorsprünge (12) aufweist und/oder mit querschnittlich dreiecksförmigen Reifen (13) versehen ist, sowie dass die Heftrolle (10) mit einem Krafterzeuger (11) gekoppelt ist, mittels dem die Heftrolle (10) von dem Metall- bzw. Plattierband (1 bzw. 4) wegbewegbar ist.

5. Vorrichtung nach Anspruch 4, dadurch gekennzeichnet, dass der bzw. den Heftrolle/n (10) Bürsten (15) zum Aufrauhen der Oberfläche (5, 6) des Metallbandes (1) vorgeschaltet sind.

6. Vorrichtung nach Anspruch 4 oder 5, dadurch gekennzeichnet, dass sowohl Bürsten (15) als auch Heftrollen (10) nebst Krafterzeuger (11) (zum Beispiel eine hydraulische Einrichtung) an einem Tragrahmen (8) angeordnet sind, welcher das zu Rollen (7) aufgewickelte Plattierband (4) aufnimmt.

7. Vorrichtung nach Anspruch 6, dadurch gekennzeichnet, dass das Plattierband (4) von der Rolle (7) über eine Umlenkrolle (9) geführt ist, wobei der Rolle (7) und/oder der Umlenkrolle (9) eine Rutschbremse od. dgl. zugeordnet ist.

## Claims

1. Process for manufacturing clad strips, in the course of which a core strip (1), in particular a metal strip (1), is fed to a roll gap formed by at least two rolls (2,3) and is clad at least on one side by a cladding strip (4) whereby the cladding strip (4) is attached to the core strip (1) by mechanical deformation before reaching the roll gap, characterized in that the attachment process is at most carried out until the cladding strip (4) together with the core strip (1) is gripped by at least one roll (2, 3).

2. Process according to claim 1, characterized in that the surface of the core strip (1) is roughened before the attachment step.

3. Process according to claim 1 or 2, characterized in that a hot core strip (1) (e.g. aluminium strip at 400 to 600°C) is clad with a cold cladding strip (4) (e.g. aluminium strip at 20 to 70°C).

4. Device for manufacturing clad strips made of a metal core strip (1) led from a continuous caster, coil or the like to a roll gap formed by at least two rolls (2, 3), and at least one cladding strip (4), in which the metal core strip (1), before it enters the roll gap, is engaged above and/or below by an attachment roll (10), and the cladding strip (4) is introduced between the metal core strip (1) and the attachment roll (10), characterized in that the attachment roll (10) features on its outer surface (14) projections (12) and/or circumferential projecting strips (13), as well as the attachment roll (10) is linked to a power producer which enables the attachment roll (10) to be moved away from the metal core and cladding strips (1 and 4).

5. Device according to claim 4, characterized in that brushes (15) for roughening the surface of the metal core strip (1) are provided in line upstream of the attachment roll or rolls (10).

6. Device according to claim 4 or 5, characterized in that as well the brushes (15) as the attachment rolls (10) are mounted together with the power producer (e.g. a hydraulic equipment) on a supporting frame (8) which supports the cladding strip (4) coiled on rolls (7).

7. Device according to claim 6, characterized in that the clad strip (4) is led from the roll (7) via a deflection roll (9), roll (7) and/or deflection roll (9) being provided with a braking mechanism or the like.

## Revendications

1. Procédé pour la fabrication de bandes plaquées, avec lequel une bande d'âme (1), en particulier une bande métallique (1), est amenée à une emprise formée d'au moins deux cylindres (2, 3) et est plaquée au moins d'un côté d'une bande à plaquer (4), à l'occasion de quoi la bande à plaquer (4) est attachée à la bande d'âme (1) par déformation mécanique avant de parvenir à l'emprise, caractérisé en ce que le procédé à brocher est continué tout au plus jusqu'à ce que la bande à plaquer (4), conjointement avec la bande d'âme (1), est prise par au moins un cylindre (2, 3).

2. Procédé selon la revendication 1, caractérisé en ce que la surface de la bande d'âme (1) est rendu rugueuse avant le procédé à brocher.

3. Procédé selon l'une des revendications 1 ou 2, caractérisé en ce qu'une bande d'âme chaude (1) (p.ex. bande d'aluminium à 400–600°C) est plaquée d'une bande à plaquer froide (4) (p.ex. bande d'aluminium à 20–70°C).

4. Dispositif pour la fabrication de bandes plaquées à partir d'une bande d'âme métallique (1) amenée à une emprise formée d'au moins deux cylindres (2, 3), bande sortant d'une machine à couler de bandes, d'un dividor etc., et d'une bande à plaquer (4), lors duquel la bande d'âme métallique (1) est recouverte et appuyée par un cylindre à brocher (10) arrangé avant l'entrée dans l'emprise et la bande à plaquer (4) est arrangée entre la bande métallique et le cylindre à brocher (10), caractérisé en ce que le cylindre à brocher (10) présente des saillies (12) sur sa surface latérale (14) et/ou est pourvu de bandages (13) de section triangulaire, ainsi que le cylindre à brocher (10) est couplé à un producteur d'énergie (11) par lequel le cylindre à brocher est détachable de la bande métallique (1) respectivement de la bande à plaquer (4).

5. Dispositif selon la revendication 4, caractérisé en ce que des brosses (15) pour rendre rugueux la surface (5, 6) de la bande métallique sont insérées en ligne avant le cylindre ou les cylindres à brocher (10).

6. Dispositif selon l'une des revendications 4 ou 5, caractérisé en ce que non seulement les brosses (15) mais aussi les cylindres à brocher (15) sont arrangés, avec le producteur d'energie (11) (p.ex. une installation hydraulique), à un cadre porteur (8), lequel appuye la bande à plaquer (4) enroulée sur des couronnes de bande (7).

7. Dispositif selon revendication 6, caractérisé en ce que la bande à plaquer est amenée de la couronne (7) de bande via un cylindre de déviation (9), à l'occasion de quoi un frein de glissement etc. est attribué à la couronne de bande (7) et/ou au cylindre de déviation.

Fig.1

0 140 834

FIG. 2

FIG. 3

FIG. 4

FIG. 5

Fig.6

Fig. 7